# EUROPEAN PATENT APPLICATION

(11) **EP 3 236 365 A1**
(43) Date of publication of application: **25.10.2017**
(21) Application number: 16856564.6
(22) Date of filing: 15.02.2016
(51) Int. Cl.: G06F 17/30

(54) **DATA QUERY METHOD AND DEVICE**

(30) Priority: 21.10.2015 CN 201510689335
(71) Applicant: Huawei Technologies Co., Ltd., Longgang District Shenzhen, Guangdong 518129 (CN)
(72) Inventor: GUO, Yijun, Shenzhen Guangdong 518129 (CN); BI, Jieshan, Shenzhen Guangdong 518129 (CN)
(74) Representative: Kreuz, Georg Maria
(86) International application number: PCT/CN2016/073808
(87) International publication number: WO 2017/067117

(57) **Abstract**

The present invention relates to the field of databases, and provides a data query method and apparatus. The method includes: receiving a query request sent by a client, where the query request includes query data; querying a target secondary index of a primary index according to the query request, to obtain a target row primary key corresponding to the query data; obtaining, from the primary index, index data in a target index row corresponding to the target row primary key; and providing the index data in the target index row for the client. According to the present invention, the target secondary index is queried by using the query data. Index data in at least two second index columns is recorded in a first index column in the target secondary index. A row primary key corresponding to the query data is obtained, and then index data corresponding to the row primary key is obtained, thereby resolving a problem that in a related technology, when query is performed, query efficiency is relatively low. An effect that index data in multiple second index columns can be queried by performing query once is achieved. Operations during the query process are simple, and query efficiency is relatively high.

## Description

### TECHNICAL FIELD

The present invention relates to the field of databases, and in particular, to a data query method and apparatus.

### BACKGROUND

A database table is an object used to store data in a database. Multiple values are usually stored in the database table in a form of rows and columns. One row of data is a record (for example, all information about a person in an address book database), and all values (for example, home addresses of all people in the address book database) of a same data type in the database table are recorded in one column of data (one field). When data is queried in the database table, to more quickly obtain a whole row of data that needs to be obtained, an index usually needs to be established. An index is a structure used to sort one or more columns of values in the database table. The index generally includes a primary index (level-1 index) and a secondary index. Data of all rows in the database table is recorded in the primary index, where each row of data is referred to as one index row, and each column of data is referred to as one index column. Any index data in each row of data corresponds to a row primary key (Rowkey) of the row. The secondary index is usually established according to an index column in the primary index and a row primary key that corresponds to each index data in the index column.

There is a data query method in a related technology. In the method, when a client does not know an index column to which query data (the query data is one piece of index data in a whole row of data that the client needs to obtain) belongs, multiple secondary indexes established according to multiple index columns to which the query data may belong need to be queried. The client needs to send a query request (including the query data) to a server end (where the database is located at the server end) each time the client queries a secondary index. After receiving the query request, the server end queries the corresponding secondary index. After query of multiple secondary indexes is complete, the server end returns results of multiple times of query to the client (where if it is found that the query data exists in the multiple secondary indexes, a row primary key corresponding to the query data is obtained; the primary index is queried according to the row primary key, to obtain a whole row of data corresponding to the row primary key; finally, the whole row of data is returned to the client; or if the query data is not found in the multiple secondary indexes, an indication that there is no data satisfying a condition is returned to the client). For example, the query data is a phone number. The phone number used as the query data may belong to any column of three columns of data in the primary index: mobile number, family phone number, and office phone number. In query, the client needs to send, to the server end according to a phone number, three requests for querying three secondary indexes established according to the three columns of data: the mobile number, the family phone number, and the office phone number. The server end separately queries the three indexes according to the three requests for querying the three indexes, and then the server end returns query results of querying the three indexes to the client.

During a process of implementing the present invention, the inventor finds that the foregoing manner has at least the following disadvantages: in the foregoing manner, when query is performed, multiple secondary indexes need to be queried separately, operations during the query process increase exponentially, and query efficiency is relatively low.

### SUMMARY

To resolve a problem that in a related technology, when query is performed, multiple secondary indexes need to be queried separately, operations during the query process increase exponentially, and query efficiency is relatively low, this application provides a data query method and apparatus. Technical solutions are as follows:

According to a first aspect, a data query method is provided, where the method includes:
receiving, by a database end, a query request that includes query data and that is sent by a client, where the query data is a piece of index data recorded in a primary index;
querying, by the database end, a target secondary index of the primary index according to the received query request, to obtain a target row primary key corresponding to the query data, where the target secondary index includes a first index column, index data in at least two second index columns in the primary index is recorded in the first index column, each index data in each second index column corresponds to a respective row primary key in the primary index, the first index column refers to an index column in a secondary index, and the second index column refers to an index column in the primary index;
after obtaining the target row primary key, querying, by the database end, the primary index according to the target row primary key, and obtaining index data in a target index row corresponding to the target row primary key, where the index data in the target index row is data that the client needs to obtain; and
providing, by the database end, the index data in the target index row for the client, to complete data query.

According to the data query method provided in this application, a target secondary index is queried by using query data. Index data in at least two second index columns is recorded in a first index column in the target secondary index. A row primary key corresponding to the query data is obtained, and then index data corresponding to the row primary key is obtained, thereby resolving a problem that in a related technology, when query is performed, multiple secondary indexes need to be queried separately, operations during the query process increase exponentially, and query efficiency is relatively low. An effect that index data in multiple second index columns can be queried by performing query once is achieved. The operations during the query process are simple, and query efficiency is relatively high.

In a possible design, the method further includes:
when the secondary index is established, obtaining, by the database end, the index data in the at least two second index columns from the primary index;
mapping, by the database end, the obtained index data in the at least two second index columns into a virtual column, where the index data in the at least two second index columns is recorded in the virtual column; and
establishing the target secondary index according to the virtual column and the row primary key that corresponds to each index data in the virtual column, where the virtual column is the first index column in the target secondary index, and when the target secondary index is established, the database end may set an identifier for the target secondary index, where the identifier may be used to distinguish and identify the target secondary index.

The row primary key corresponding to each index data may be recorded in the target secondary index; or the row primary key corresponding to each index data may not be recorded, and instead, mapping between each index data and the row primary key corresponding to the index data in the primary index is established, so that each index data points to a respective row primary key of an index row in the primary index.

In addition, a process of establishing the secondary index may include a process of defining the secondary index and a data filling process. The process of defining the secondary index is a process of establishing an architecture of the secondary index, the architecture may be considered as a table, and in the table, columns of index data in the primary index that need to be filled in the table and an identifier of the secondary index are determined. The data filling process is a process of filling, in the architecture of the secondary index, the index data in the virtual column.

This implementation method is a process of establishing the target secondary index, and the database end may establish any secondary index by using this method.

According to the data query method provided in this application, a virtual column is used as a first index column in a secondary index, thereby achieving an effect that the first index column in a target secondary index can include multiple second index columns in a primary index.

In a possible design, each second index column in the primary index corresponds to a respective data type, and the establishing the target secondary index according to the virtual column and the row primary key that corresponds to each index data in the virtual column includes:
determining, by the database end, a data type of each index data in the virtual column according to the data type corresponding to each index column of the at least two second index columns, which have a mapping relationship with the virtual column, in the primary index; and
when establishing the target secondary index, using, by the database end, the data type of each index data in the virtual column as an additional column of the target secondary index, where the additional column may indicate the data type of each index data in the first index column in the secondary index.

According to the data query method provided in this application, an additional column is added to a secondary index, thereby achieving an effect that a data type can be found in the secondary index.

In a possible design, after the establishing the target secondary index according to the virtual column and the row primary key that corresponds to each index data in the virtual column, the method further includes:
when the target secondary index is updated, receiving, by the database end, a write request that includes a newly added index row and that is sent by the client and;
writing, by the database end, the newly added index row into the primary index, and allocating a corresponding row primary key to the newly added index row;
determining, by the database end, the at least two second index columns corresponding to the virtual column in the target secondary index, where the second index column corresponding to the virtual column is the second index column having a mapping relationship with the virtual column;
obtaining, by the database end from the newly added index row, the index data that belongs to the at least two second index columns corresponding to the virtual column; and
writing, by the database end into the target secondary index, the index data that belongs to the at least two second index columns and that is in the newly added index row, to complete update of the target secondary index.

This implementation manner is a process of updating the target secondary index. After receiving the write request, the database end may update any secondary index in this manner.

In a possible design, the query request further includes a target data type and an identifier of the target secondary index, and the querying a target secondary index of the primary index according to the query request, to obtain a target row primary key corresponding to the query data includes:
determining, by the database end, the target secondary index according to the identifier of the target secondary index, where the identifier may be data, such as a name of the target secondary index, that can be used to identify the target secondary index;
searching, by the database end, the target secondary index for a target index row in which the target data type and the query data are recorded; and
after obtaining the row primary key of the target index row, determining, by the database end, a row primary key of the target secondary index row as the target row primary key.

According to the data query method provided in this application, a target secondary index including an additional column is queried by using a target data type and query data, thereby achieving an effect of narrowing down a search range.

According to a second aspect, a data query apparatus is provided, where the apparatus includes:
a request receiving unit, configured to receive a query request sent by a client, where the query request includes query data;
an index query unit, configured to query a target secondary index of a primary index according to the query request, to obtain a target row primary key corresponding to the query data, where the target secondary index includes a first index column, index data in at least two second index columns in the primary index is recorded in the first index column, each index data in the at least two second index columns corresponds to a respective row primary key, and the row primary key corresponds to an index row in the primary index;
a data obtaining unit, configured to obtain, from the primary index, index data in a target index row corresponding to the target row primary key; and
a data providing unit, configured to provide the index data in the target index row for the client.

In a possible design, the apparatus further includes:
an index data obtaining unit, configured to obtain the index data in the at least two second index columns from the primary index;
a virtual mapping unit, configured to map the index data in the at least two second index columns into a virtual column, where the index data in the at least two second index columns is recorded in the virtual column; and
an index establishment unit, configured to establish the target secondary index according to the virtual column and the row primary key that corresponds to each index data in the virtual column, where the virtual column is the first index column in the target secondary index.

In a possible design, each second index column in the primary index corresponds to a respective data type, and the index establishment unit is configured to:
determine a data type of each index data in the virtual column according to the respective data type corresponding to each second index column of the at least two second index columns in the primary index; and
establish the target secondary index according to the virtual column, the row key value corresponding to each index data in the virtual column, and the data type of each index data in the virtual column, where the data type of each index data in the virtual column forms an additional column of the target secondary index.

In a possible design, the apparatus further includes:
a write receiving unit, configured to receive a write request sent by the client, where the write request includes a newly added index row;
an index write unit, configured to: write the newly added index row into the primary index, and allocate a corresponding row primary key to the newly added index row;
an index column determining unit, configured to determine the at least two second index columns corresponding to the virtual column in the target secondary index;
a newly added data obtaining unit, configured to obtain, from the newly added index row, the index data that belongs to the at least two second index columns; and
a data write unit, configured to write, into the target secondary index, the index data that belongs to the at least two second index columns and that is in the newly added index row.

In a possible design, the query request further includes a target data type and an identifier of the target secondary index, and the index query unit is configured to:
determine the target secondary index according to the identifier of the target secondary index;
determine a target secondary index row in the target secondary index according to the target data type and the query data, where index data in the target secondary index row is the same as the query data, and a data type in the target secondary index row is the same as the target data type; and
determine a row primary key of the target secondary index row as the target row primary key.

The technical solutions provided in this application may have the following beneficial effects:

A target secondary index is queried by using query data. Index data in at least two second index columns is recorded in an index column in the target secondary index. A row primary key corresponding to the query data is obtained, and then index data corresponding to the row primary key is obtained, thereby resolving a problem that in a related technology, when query is performed, multiple secondary indexes need to be queried separately, operations during the query process increase exponentially, and query efficiency is relatively low. An effect that index data in multiple second index columns can be queried by performing query once is achieved. The operations during the query process are simple, and query efficiency is relatively high.

It should be understood that the foregoing general descriptions and the following detailed descriptions are merely exemplary and explanatory, and cannot limit the present invention.

### BRIEF DESCRIPTION OF DRAWINGS

Accompanying drawings herein are incorporated in and constitute a part of this specification, illustrate embodiments conforming to the present invention, and are used together with the specification to explain a principle of the present invention.
FIG. 1 is a schematic structural diagram of an implementation environment involved in a data query method according to the embodiments of the present invention;
FIG. 2 is a flowchart of a data query method according to an embodiment of the present invention;
FIG. 3-1 is a flowchart of another data query method according to an embodiment of the present invention;
FIG. 3-2 is a flowchart of establishing a secondary index in the embodiment shown in FIG. 3-1;
FIG. 3-3 is a schematic diagram of a secondary index in the embodiment shown in FIG. 3-1;

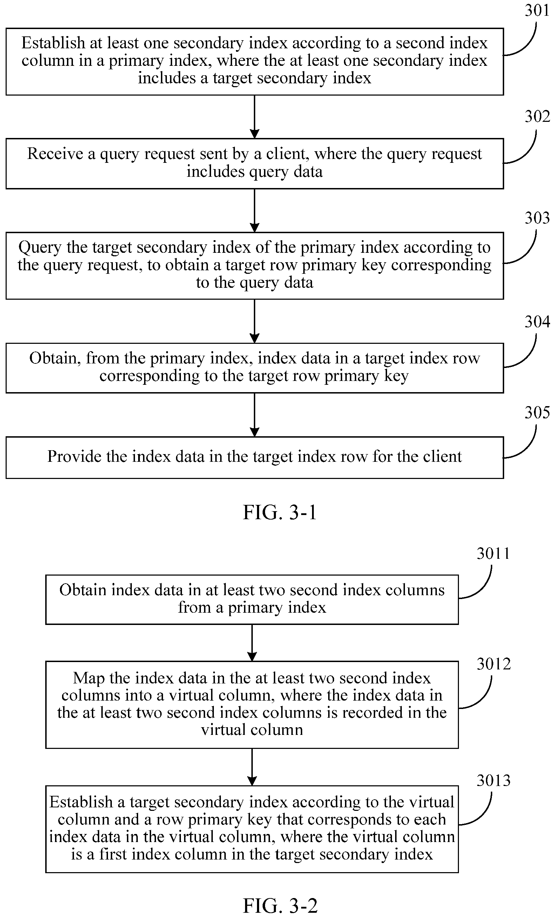

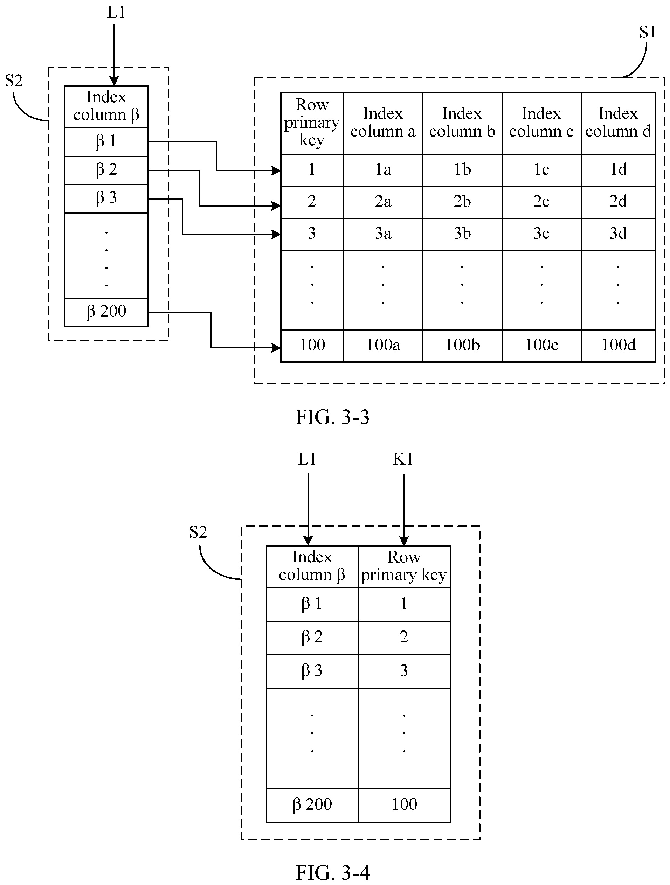

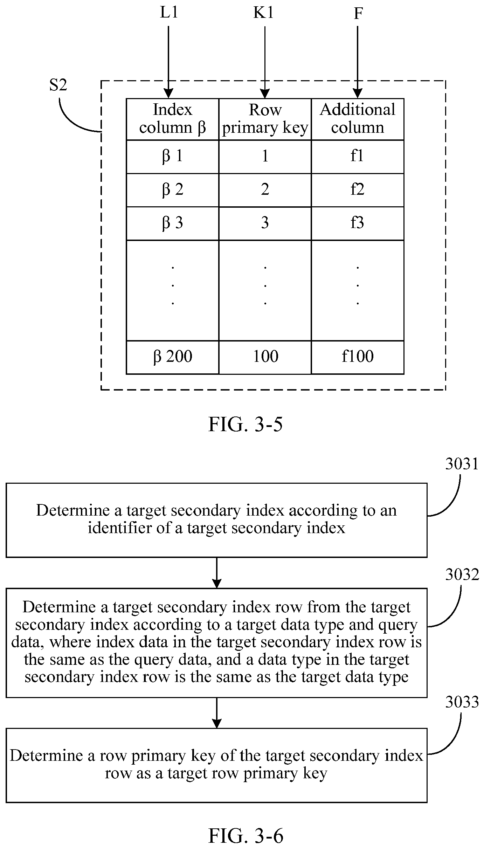

FIG. 3-4 is a schematic diagram of another secondary index in the embodiment shown in FIG. 3-1;
FIG. 3-5 is a schematic diagram of another secondary index in the embodiment shown in FIG. 3-1;
FIG. 3-6 is a flowchart of obtaining a target row key value in the embodiment shown in FIG. 3-1;

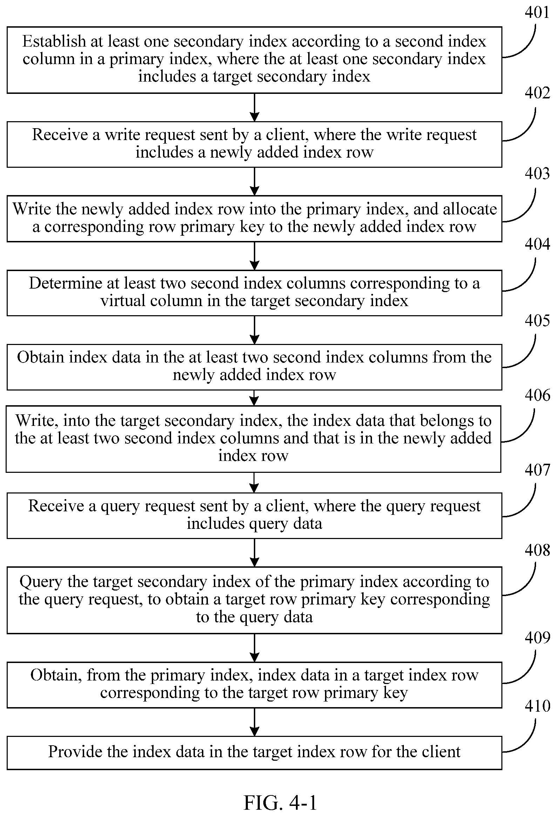

FIG. 4-1 is a flowchart of another data query method according to an embodiment of the present invention;

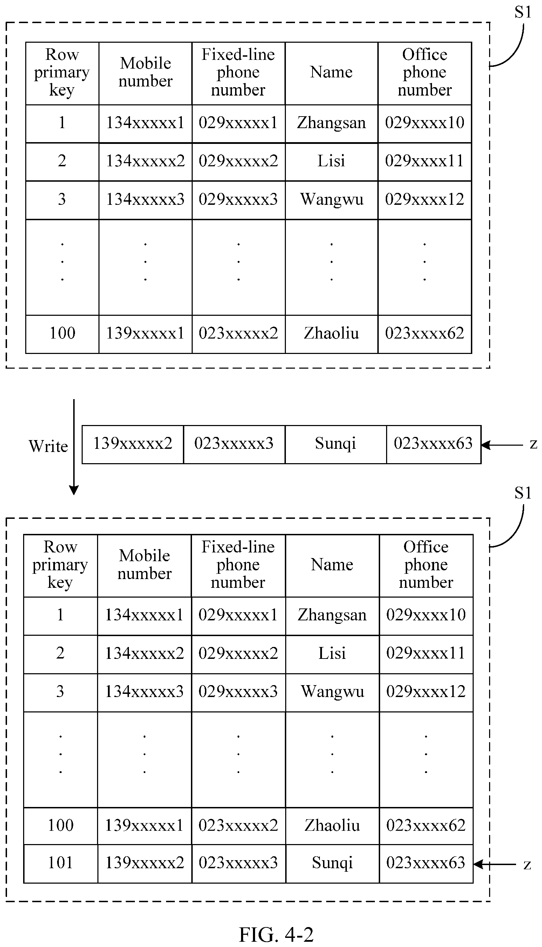

FIG. 4-2 is a schematic diagram of writing a newly added index row into a primary index in the embodiment shown in FIG. 4-1;

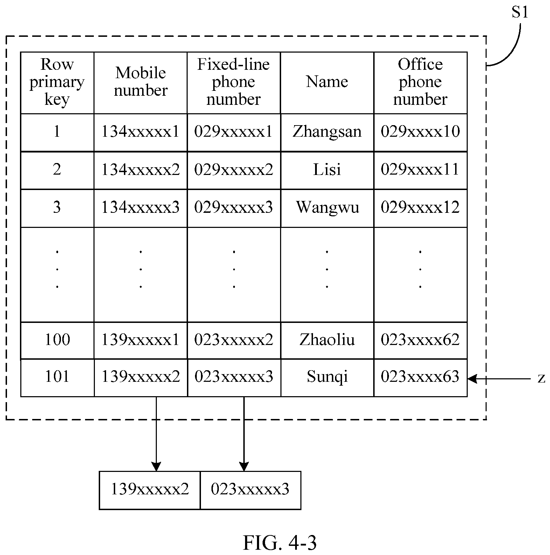

FIG. 4-3 is a schematic diagram of obtaining index data from an index column in the embodiment shown in FIG. 4-1;

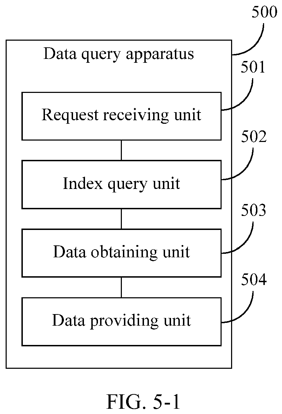

FIG. 5-1 is a block diagram of a data query apparatus according to an embodiment of the present invention;

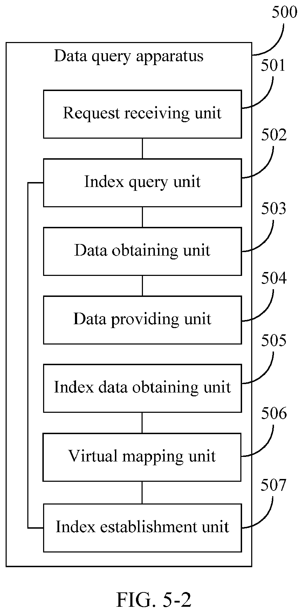

FIG. 5-2 is a block diagram of another data query apparatus according to an embodiment of the present invention;

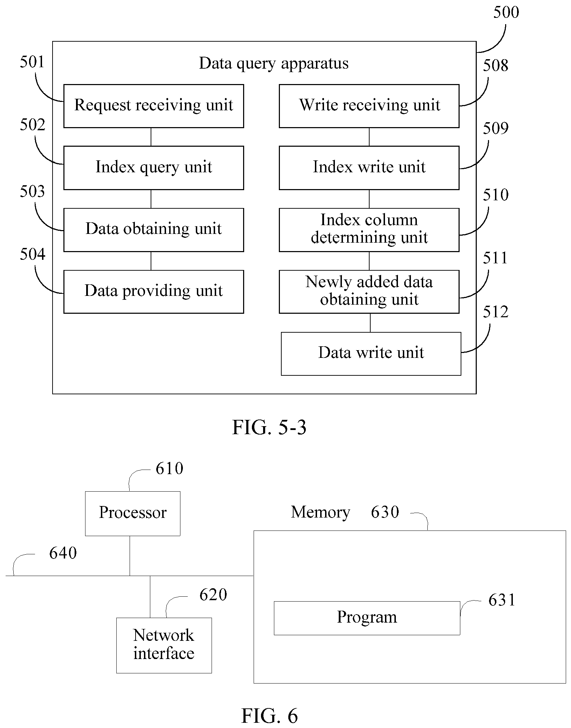

FIG. 5-3 is a block diagram of another data query apparatus according to an embodiment of the present invention; and
FIG. 6 is a structural diagram of a data query apparatus according to an embodiment of the present invention.

The foregoing accompanying drawings show specific embodiments of the present invention, and more detailed descriptions are provided in the following. The accompanying drawings and text descriptions are not intended to limit the scope of the idea of the present invention in any manner, but are intended to describe the concept of the present invention for a person skilled in the art with reference to the specific embodiments.

### DESCRIPTION OF EMBODIMENTS

Exemplary embodiments are described in detail herein, and examples thereof are shown in the accompanying drawings. When the accompanying drawings are involved in the following descriptions, unless otherwise noted, same numbers in different accompanying drawings refer to the same elements or similar elements. Implementation manners described in the following exemplary embodiments do not represent all implementation manners consistent with the present invention. On the contrary, the implementation manners are merely apparatus and method examples that are consistent with some aspects of the present invention described in detail in the appended claims.

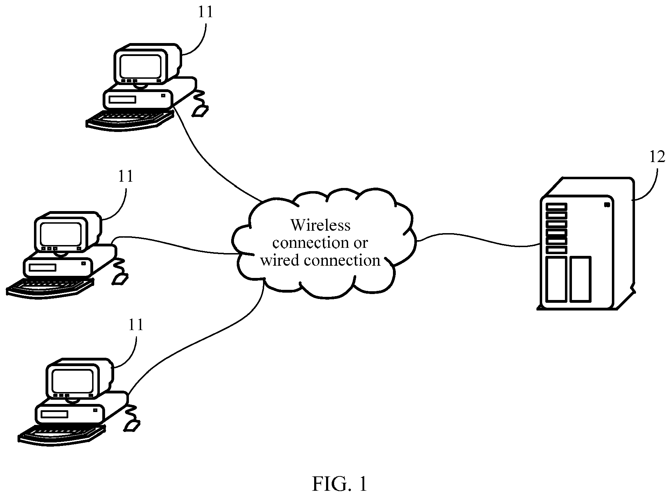

FIG. 1 is a schematic structural diagram of an implementation environment involved in a data query method according to embodiments of the present invention. This implementation environment may include a client 11 and a database end 12.

The client 11 is a terminal used by a user to query data in a database, and the client 11 may be a terminal such as a mobile phone and a computer. In this implementation environment, a quantity of clients 11 is not limited.

Data of a database is stored in the database end 12, and can be queried by the client 11. The database end 12 may be a server, a server cluster including several servers, or a cloud computing service center.

The client 11 and the database end 12 may establish a wired or a wireless connection. In addition, the client 11 and the database end 12 may further be located in one device, which is not limited in this implementation environment.

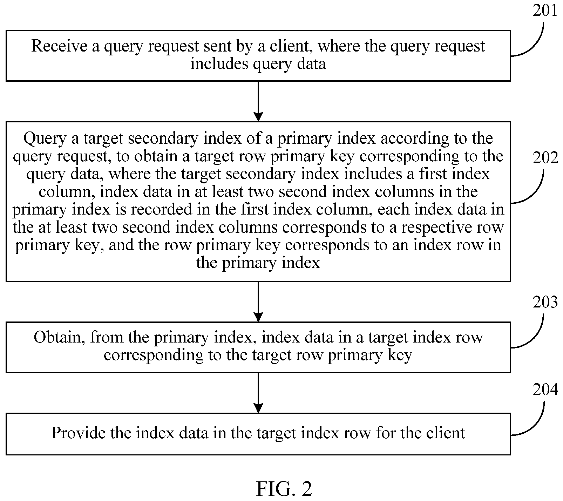

FIG. 2 is a flowchart of a data query method according to an embodiment of the present invention. This embodiment is described by using an example in which the data query method is applied to the database end 12 in the implementation environment shown in FIG. 1. The data query method may include the following steps:
Step 201: Receive a query request sent by a client, where the query request includes query data.
Step 202: Query a target secondary index of a primary index according to the query request, to obtain a target row primary key corresponding to the query data, where the target secondary index includes a first index column, index data in at least two second index columns in the primary index is recorded in the first index column, each index data in the at least two second index columns corresponds to a respective row primary key, and the row primary key corresponds to an index row in the primary index.
Step 203: Obtain, from the primary index, index data in a target index row corresponding to the target row primary key.
Step 204: Provide the index data in the target index row for the client.

In conclusion, according to the data query method provided in this embodiment of the present invention, a target secondary index is queried by using query data. Index data in at least two second index columns is recorded in a first index column in the target secondary index. A row primary key corresponding to the query data is obtained, and then index data corresponding to the row primary key is obtained, thereby resolving a problem that in a related technology, when query is performed, multiple secondary indexes need to be queried separately, operations during the query process increase exponentially, and query efficiency is relatively low. An effect that index data in multiple second index columns can be queried by performing query once is achieved. The operations during the query process are simple, and query efficiency is relatively high.

FIG. 3-1 is a flowchart of another data query method according to an embodiment of the present invention. This embodiment is described by using an example in which the data query method is applied to the database end 12 in the implementation environment shown in Fig. 1. The data query method may include the following steps:
Step 301: Establish at least one secondary index according to a second index column in a primary index, where the at least one secondary index includes a target secondary index.

When the data query method provided in this embodiment of the present invention is used, at least one secondary index may be first established according to the second index column in the primary index. The at least one secondary index may include a target secondary index, and the target secondary index is a secondary index that needs to be used for one time of data query (for example, data query performed in this embodiment of the present invention). The second index column in the embodiments of the present invention refers to an index column in the primary index.

To facilitate illustration of a principle of establishing the secondary index provided in this embodiment of the present invention, an example of establishing the target secondary index (the secondary index that needs to be used for query performed in this embodiment of the present invention) is used for description. As shown in FIG. 3-2, this step may include the following three sub-steps:
Sub-step 3011: Obtain index data in at least two second index columns from the primary index.

When at least one secondary index is established, the index data in the at least two second index columns may be first obtained from the primary index of a database. The index data in the at least two second index columns may be data subsequently used to establish the target secondary index.

Exemplarily, when the at least two second index columns are selected, selection may be performed according to a value of selectance of each second index column in the primary index. The selectance is a ratio of a quantity of different index data values in one second index column to a total amount of the index data in the second index column (for example, there are 2000 pieces of index data in an index column A, and there are 1000 different values; therefore, selectance of the index column A is 1000/2000=0.5). A higher ratio indicates greater selectance, and indicates higher query efficiency of the secondary index established by using the second index column. In this step, index data in several (at least two) second index columns having greater selectance may be obtained from the primary index.

It should be noted that in this step, the second index columns may be selected in another manner, to improve query efficiency of the target secondary index established subsequently, which is not limited in this embodiment of the present invention.

Sub-step 3012: Map the index data in the at least two second index columns into a virtual column, where the index data in the at least two second index columns is recorded in the virtual column.

After the index data in the at least two second index columns is obtained, the index data in the at least two second index columns may be mapped into the virtual column, where the index data in the at least two second index columns is recorded in the virtual column. A secondary index in a database is generally established according to index data in one second index column in the primary index, but the secondary index established in this embodiment of the present invention needs to be established according to the index data in the at least two second index columns in the primary index, and no second index column in the primary index includes the index data in the at least two second index columns. Therefore, the virtual column may be first established, and the virtual column is made to correspond to the index data in the at least two second index columns. Subsequently, the virtual column is used as a first index column in the secondary index.

Sub-step 3013: Establish the target secondary index according to the virtual column and a row primary key that corresponds to each index data in the virtual column, where the virtual column is a first index column in the target secondary index.

After the virtual column is obtained, the target secondary index may be established according to the virtual column and the row primary key that corresponds to each index data in the virtual column. The row primary key may be obtained by using the primary index. When the target secondary index is established according to the virtual column and the row primary key that corresponds to each index data in the virtual column, an architecture of the target secondary index may be first established (the establishment process may be referred to as a process of defining the target secondary index). The architecture may be construed as a table (in the table, columns of index data in the primary index that need to be filled in the table and a name of the target secondary index are determined) in which data is not filled, and then the index data in the virtual column may be filled in the architecture, that is, the target secondary index may include the architecture of the target secondary index and the index data filled in the architecture. In addition, alternatively, the architecture of the target secondary index may be first determined, then index data in the primary index is obtained, and finally, the index data is filled in the architecture of the target secondary index, which is not limited in this embodiment of the present invention. The first index column in the embodiments of the present invention refers to an index column in the secondary index.

It should be noted that when the secondary index is established, a name of the secondary index may be set, and the name is used as an identifier of the secondary index, to help a client select the secondary index and help a database end identify the secondary index. For example, when the name of the target secondary index is set, reference may be made to multiple data types of the index data in the virtual column in the secondary index (including the index data in multiple second index columns in the primary index). Exemplarily, a virtual column in a secondary index includes index data of three data types: "mobile number", "fixed-line phone number", and "office phone number", and in this case, the secondary index may be named as "phone number". This is a broader naming manner for data types in the primary index. Another naming manner may be alternatively used for the secondary index established in this embodiment of the present invention, which is not limited in this embodiment of the present invention.

In this step, when the target secondary index is established, the following two manners may be included:

In a first manner:
the virtual column is used as the first index column in the target secondary index, and mapping is established between each index data in the first index column and a row primary key that corresponds to the index data in the primary index. That is, each index data in the first index column in the target secondary index is enabled to point to a respective row primary key of an index row in the primary index. As shown in FIG. 3-3, "index column β" is a name of a first index column L1. The name may be set by the database end. Actually, only the first index column L1 is recorded in a secondary index S2, and each index data in the first index column L1 has a mapping relationship with a row primary key of an index row in a primary index S 1. It should be noted that multiple pieces of index data in the first index column L1 may be mapped into one row primary key in the primary index S 1.

In a second manner:
the virtual column is used as the first index column in the target secondary index, and a row primary key column is established, so that each index data in the first index column in the target secondary index and a corresponding row primary key are located in a same row, that is, the row primary key is directly recorded in the target secondary index. As shown in FIG. 3-4, a secondary index S2 includes a first index column L1 and a row primary key column K1, each index data in the first index column L1 corresponds to the row primary key of the same row in the row primary key column K1.

It should be noted that, when the target secondary index is established in the foregoing two manners, an additional column may further be added to the target secondary index. The process may include:
(1) A data type of each index data in the virtual column is determined according to the respective data type corresponding to each second index column of the at least two second index columns in the primary index.
   The virtual column has a mapping relationship with the at least two second index columns in the primary index; therefore, the data type of each index data in the virtual column may be determined according to data types corresponding to the index data in the at least two second index columns. Each second index column in the primary index corresponds to a respective data type, and each index data in the second index column is of a same data type. Exemplarily, if a second index column corresponds to a data type "date of birth", the data type of any index data recorded in the second index column is "date of birth".
(2) The target secondary index is established according to the virtual column, a row key value corresponding to each index data in the virtual column, and the data type of each index data in the virtual column.

After the data type of the index data in the virtual column is obtained, the target secondary index may be established according to the virtual column, the row key value corresponding to each index data in the virtual column, and the data type of each index data in the virtual column, that is, the data type of each index data in the virtual column forms the additional column of the target secondary index. As shown in FIG. 3-5, FIG. 3-5 shows the target secondary index established in the foregoing second manner, where the target secondary index S2 includes: the first index column L1, the row primary key column K1, and the additional column F. The target secondary index established in the foregoing first manner includes the first index column and the additional column, and details are not described herein again.

It should be noted that, when there is a case in which multiple pieces of index data of a row in the primary index are repeated, and this case may affect a query result (where it is possible that data types of the multiple pieces of index data cannot be known), the data type of each index data in the virtual column may be directly recorded in the virtual column, so as to help the database end identify index data when repetition of index data in the virtual column occurs. A data type of index data may indicate a second index column to which the index data belongs in the primary index.

The database end may establish, in step 3011 and step 3013, multiple secondary indexes including the target secondary index.

Step 302: Receive a query request sent by a client, where the query request includes query data.

After at least one secondary index including the target secondary index is established, the query request sent by the client may be received, where the query request includes query data, and the query data is a piece of index data in the primary index. The query request may further include an identifier of the target secondary index, where the identifier is used to determine the target secondary index from multiple secondary indexes.

Step 303: Query the target secondary index of the primary index according to the query request, to obtain a target row primary key corresponding to the query data.

After the query request sent by the client is obtained, the database end may query the target secondary index of the primary index according to the query request, to obtain the target row primary key corresponding to the query data. The target secondary index includes the first index column, the index data in the at least two second index columns in the primary index is recorded in the first index column, each index data in the at least two second index columns corresponds to a respective row primary key, and the row primary key corresponds to an index row in the primary index.

The target secondary index is established according to the index data in multiple second index columns; therefore, multiple second index columns in the primary index may be queried by performing a query operation once. However, a secondary index in the prior art is established according to one second index column in a primary index, only one second index column in the primary index can be queried by performing the query operation once. To achieve a search effect same as that of the secondary index established in this embodiment of the present invention, query needs to be performed multiple times, and query efficiency is relatively low.

Exemplarily, in a related technology, a statement used when the database end performs query may be "SELECT * FROM UserInfo WHERE HomePhone = '185333' OR Telphone = '185333' OR OfficePhone = '185333';", where "UserInfo" is a name of the primary index, and "HomePhone", "Telphone", and "OfficePhone" are names of three secondary indexes of the primary index. The three secondary indexes are all named according to names of second index columns (a name of a second index column may be the data type of the second index column in the primary index) recorded in the secondary indexes. For example, a secondary index whose name is "OfficePhone" is established according to a second index column whose name is "OfficePhone", and "185333" is the query data. This statement represents that the database end separately queries, in the primary index whose name is "UserInfo" and by using the query data "185333", the three second index columns whose names are "HomePhone", "Telphone", and "OfficePhone", and the three secondary indexes need to be queried. This query manner severely affects performance of the database end and affects a query speed when the primary index includes a relatively large data volume.

In contrast, in this embodiment of the present invention, the statement used when the database end performs query may be "SELECT * FROM UserInfo WHERE PhoneNum = '185333';", where "PhoneNum" is a name of a secondary index (that is, an identifier of the secondary index) in the secondary indexes established in step 301, and the secondary index may be established according to the three second index columns whose names are "HomePhone", "Telphone", and "OfficePhone". This statement represents that the database end queries, in the primary index whose name is "UserInfo" and by using the query data "185333", a secondary index whose name is "PhoneNum", and an effect of three times of query in the related technology can be achieved only by performing query once. A query process is simple and quick.

When the query request includes a target data type and the identifier of the target secondary index, as shown in FIG. 3-6, this step may include the following three sub-steps:
In sub-step 3031, the target secondary index is determined according to the identifier of the target secondary index.

The database end may first determine the target secondary index from multiple secondary indexes of the primary index according to the identifier of the target secondary index.

In sub-step 3032, a target secondary index row is determined from the target secondary index according to the target data type and the query data, where index data in the target secondary index row is the same as the query data, and a data type in the target secondary index row is the same as the target data type.

After the database end determines the target secondary index, the target secondary index row may be determined from the target secondary index according to the target data type and the query data. The index data in the target secondary index row is the same as the query data, and the data type in the target secondary index row is the same as the target data type, that is, a row in which recoded data is the same as the target data type and the query data is found in the database, and the row is determined as the target secondary index row.

It should be noted that, when the secondary index includes an additional column, the secondary index may be considered as a composite index. When the secondary index is queried according to the target data type and the query data, an effect of narrowing down a query range can be achieved because sorting is performed in the database according to index data, and identical pieces of index data are arranged adjacent to each other. In this way, when performing query in the secondary index, the database end only needs to query the secondary index for all rows in which the target data type is recorded, or query the secondary index for all rows in which the query data is recorded, to complete query of the secondary index. In addition, because a repetition rate of data types is relatively high, sorting may be performed in the secondary index according to the data types.

Exemplarily, as listed in Table 1, Table 1 is a schematic table of a secondary index.

| Row primary key | Additional column | First index column |
|---|---|---|
| 2 | Male | 175 |
| 4 | Male | 169 |
| 3 | Female | 160 |
| 1 | Female | 165 |

The leftmost column in Table 1 is the row primary key column, the middle column is the additional column added by using the data type, and the rightmost column is the first index column in which the index data is recorded. For a sorting sequence, sorting is performed by using the additional column. If the query data in the query request is "169", and the target data type is "male", when performing query, the database end only needs to start querying from the first row until all index rows whose additional columns are "male" are queried, to complete query of the secondary index.

In sub-step 3033, a row primary key of the target secondary index row is determined as the target row primary key.

After determining the target secondary index row, the database end may obtain the row primary key of the target secondary index row by using the target secondary index, and determine the row primary key as the target row primary key.

Step 304: Obtain, from the primary index, index data in a target index row corresponding to the target row primary key.

After obtaining the target row primary key corresponding to the query data, the database end may obtain, from the primary index, the index data in the target index row corresponding to the target row primary key, where the index data is data that the client needs to obtain. Exemplarily, the primary index is the primary index S1 in FIG. 3-3, the target row primary key is "3", and index data "3a, 3b, 3c, and 3d" may be obtained from the primary index S1.

Step 305: Provide the index data in the target index row for the client.

After obtaining the index data in the target index row, the database end may provide the index data in the target index row for the client, so as to complete the query request sent by the client.

It should be additionally noted that, according to the data query method provided in this embodiment of the present invention, index data in at least two second index columns is mapped into a virtual column, thereby achieving an effect that a secondary index can be established according to the virtual column and a row primary key that corresponds to the index data in the virtual column.

In conclusion, according to the data query method provided in this embodiment of the present invention, a target secondary index is queried by using query data. Index data in at least two second index columns is recorded in a first index column in the target secondary index. A row primary key corresponding to the query data is obtained, and then index data corresponding to the row primary key is obtained, thereby resolving a problem that in a related technology, when query is performed, multiple secondary indexes need to be queried separately, operations during the query process increase exponentially, and query efficiency is relatively low. An effect that index data in multiple second index columns can be queried by performing query once is achieved. The operations during the query process are simple, and query efficiency is relatively high.

FIG. 4-1 is a flowchart of another data query method according to an embodiment of the present invention. This embodiment is described by using an example in which the data query method is applied to the database end 12 in the implementation environment shown in FIG. 1. The data query method may include the following steps:
Step 401: Establish at least one secondary index according to a second index column in a primary index, where the at least one secondary index includes a target secondary index.

When the data query method provided in this embodiment of the present invention is used, at least one secondary index may be first established according to the second index column in the primary index. The at least one secondary index may include a target secondary index, and the target secondary index is a secondary index that needs to be used for one time of query (for example, query performed in this embodiment of the present invention).

For this step, reference may be made to step 301 in the embodiment shown in FIG. 3-1, and details are not described herein again.

Step 402: Receive a write request sent by a client, where the write request includes a newly added index row.

After the at least one secondary index including the target secondary index is established, if a user wants to write a new index row (record) into the primary index, the user may send the write request to a database end by using the client, where the write request includes the newly added index row.

Step 403: Write the newly added index row into the primary index, and allocate a corresponding row primary key to the newly added index row.

After obtaining the newly added index row, the database end may write the newly added index row into the primary index, and allocate the corresponding row primary key to the newly added index row. After writing the newly added index row into the primary index, the database end may allocate the corresponding row primary key to the newly added index row. Exemplarily, as shown in FIG. 4-2, FIG. 4-2 is a schematic diagram of an updated primary index S1 obtained after a newly added index row z is written into a primary index S1. The primary index S1 includes: four second index columns whose names are "mobile number", "fixed-line phone number", "name", and "office phone number", and one row primary key column. Data of the four types: "mobile number", "fixed-line phone number", "name", and "office phone number", is recorded in the newly added index row z. In the figure, the newly added index row z used as the last index row is added to the primary index S 1.

Step 404: Determine at least two second index columns corresponding to a virtual column in the target secondary index.

After writing the newly added index row into the primary index, and allocating the corresponding row primary key to the newly added index row, the database end may start updating the target secondary index. When updating the target secondary index, the database end may first determine the at least two second index columns corresponding to the virtual column in the target secondary index. The second index column corresponding to the virtual column is a second index column having a mapping relationship with the virtual column.

Step 405: Obtain, from the newly added index row, index data that belongs to the at least two second index columns.

After the at least two second index columns corresponding to the virtual column in the target secondary index are determined, the index data that belongs to the second index columns may be obtained from the newly added index row. Exemplarily, as shown in FIG. 4-3, FIG. 4-3 shows a primary index S1 into which the newly added index row z is written. If the second index columns corresponding to the virtual column in the target secondary index are "mobile number" and "fixed-line phone number", index data "139xxxx2" and "023xxxx3" that belong to "mobile number" and "fixed-line phone number" may be obtained.

Step 406: Write, into the target secondary index, the index data that belongs to the at least two second index columns and that is in the newly added index row.

After the index data that belongs to the at least two second index columns corresponding to the virtual column is obtained from the newly added index row, the index data may be written into the target secondary index. In addition, the row primary key of the newly added index row may be written into the target secondary index, or a mapping relationship between the index data and the row primary key of the newly added index row is established in the target secondary index. Exemplarily, the primary index S1 shown in FIG. 4-3 is used as an example. If a secondary index S2 is established according to the second index columns "mobile number" and "fixed-line phone number", and in step 406, the index data of the two second index columns that is obtained from the newly added index row z is "139xxxx2" and "023xxxx3", "139xxxx2" and "023xxxx3" may be written into the secondary index S2, and a row primary key "101" of the newly added index row z is written into the secondary index S2, or a mapping relationship between "139xxxx2" and "023xxxx3", and the row primary key "101" of the newly added index row z is established in the secondary index S2.

Steps 402 to 406 are steps of updating the target secondary index. The database end may update any secondary index according to these steps.

Step 407: Receive a query request sent by a client, where the query request includes query data.

The database end may receive the query request sent by the client, where the query request includes the query data, and the query data is one piece of index data in the primary index. The query request may further include an identifier of the target secondary index, where the identifier is used to determine the target secondary index from multiple secondary indexes.

Step 408: Query the target secondary index of the primary index according to the query request, to obtain a target row primary key corresponding to the query data.

After the query request sent by the client is obtained, the database end may query the target secondary index of the primary index according to the query request, to obtain the target row primary key corresponding to the query data. The target secondary index includes a first index column, the index data in the at least two second index columns in the primary index is recorded in the first index column, each index data in the at least two second index columns corresponds to a respective row primary key, and the row primary key corresponds to an index row in the primary index.

For this step, reference may be made to step 304 in the embodiment shown in FIG. 3-1, and details are not described herein again.

Step 409: Obtain, from the primary index, index data in a target index row corresponding to the target row primary key.

After the target row primary key corresponding to the query data is obtained, the index data in the target index row corresponding to the target row primary key may be obtained from the primary index, where the index data is data that the client needs to obtain.

Step 410: Provide the index data in the target index row for the client.

After obtaining the index data in the target index row, the database end may provide the index data in the target index row for the client, so as to complete the query request sent by the client.

It should be additionally noted that, according to the data query method provided in this embodiment of the present invention, a write request sent by a client is obtained, and a secondary index is updated according to the write request, thereby achieving an effect of updating a secondary index in which index data in multiple second index columns is recorded.

In conclusion, according to the data query method provided in this embodiment of the present invention, a target secondary index is queried by using query data. Index data in at least two second index columns is recorded in a first index column in the target secondary index. A row primary key corresponding to the query data is obtained, and then index data corresponding to the row primary key is obtained, thereby resolving a problem that in a related technology, when query is performed, multiple secondary indexes need to be queried separately, operations during the query process increase exponentially, and query efficiency is relatively low. An effect that index data in multiple second index columns can be queried by performing query once is achieved. The operations during the query process are simple, and query efficiency is relatively high.

The following describes apparatus embodiments of the present invention, which can be used to execute the method embodiments of the present invention. For details that are not disclosed in the apparatus embodiments of the present invention, reference is made to the method embodiments of the present invention.

FIG. 5-1 is a block diagram of a data query apparatus according to an embodiment of the present invention. The data query apparatus may be implemented as all or some parts of a database end 12 by using software, hardware, or a combination thereof. The data query apparatus 500 may include:
a request receiving unit 501, configured to receive a query request sent by a client, where the query request includes query data;
an index query unit 502, configured to query a target secondary index of a primary index according to the query request, to obtain a target row primary key corresponding to the query data, where the target secondary index includes a first index column, index data in at least two second index columns in the primary index is recorded in the first index column, each index data in the at least two second index columns corresponds to a respective row primary key, and the row primary key corresponds to an index row in the primary index;
a data obtaining unit 503, configured to obtain, from the primary index, index data in a target index row corresponding to the target row primary key; and
a data providing unit 504, configured to provide the index data in the target index row for the client.

In conclusion, according to the data query apparatus provided in this embodiment of the present invention, a target secondary index is queried by using query data. Index data in at least two second index columns is recorded in a first index column in the target secondary index. A row primary key corresponding to the query data is obtained, and then index data corresponding to the row primary key is obtained, thereby resolving a problem that in a related technology, when query is performed, multiple secondary indexes need to be queried separately, operations during the query process increase exponentially, and query efficiency is relatively low. An effect that index data in multiple second index columns can be queried by performing query once is achieved. The operations during the query process are simple, and query efficiency is relatively high.

Optionally, as shown in FIG. 5-2, the data query apparatus 500 further includes:
an index data obtaining unit 505, configured to obtain the index data in the at least two second index columns from the primary index;
a virtual mapping unit 506, configured to map the index data in the at least two second index columns into a virtual column, where the index data in the at least two second index columns is recorded in the virtual column; and
an index establishment unit 507, configured to establish the target secondary index according to the virtual column and the row primary key that corresponds to each index data in the virtual column, where the virtual column is the first index column in the target secondary index.

Optionally, each second index column in the primary index corresponds to a respective data type, and the index establishment unit 507 is configured to:
determine a data type of each index data in the virtual column according to the respective data type corresponding to each second index column of the at least two second index columns in the primary index; and
establish the target secondary index according to the virtual column, a row key value corresponding to each index data in the virtual column, and the data type of each index data in the virtual column, where the data type of each index data in the virtual column forms an additional column of the target secondary index.

Optionally, as shown in FIG. 5-3, the data query apparatus 500 further includes:
a write receiving unit 508, configured to receive a write request sent by the client, where the write request includes a newly added index row;
an index write unit 509, configured to: write the newly added index row into the primary index, and allocate a corresponding row primary key to the newly added index row;
an index column determining unit 510, configured to determine the at least two second index columns corresponding to the virtual column in the target secondary index;
a newly added data obtaining unit 511, configured to obtain, from the newly added index row, the index data that belongs to the at least two second index columns; and
a data write unit 512, configured to write, into the target secondary index, the index data that belongs to the at least two second index columns and that is in the newly added index row.

Optionally, the query request further includes a target data type and an identifier of the target secondary index, and the index query unit 502 is configured to:
determine the target secondary index according to the identifier of the target secondary index;
determine a target secondary index row in the target secondary index according to the target data type and the query data, where index data in the target secondary index row is the same as the query data, and a data type in the target secondary index row is the same as the target data type; and
determine a row primary key of the target secondary index row as the target row primary key.

It should be additionally noted that, according to the data query apparatus provided in this embodiment of the present invention, index data in at least two second index columns is mapped into a virtual column, thereby achieving an effect that a secondary index can be established according to the virtual column and a row primary key that corresponds to the index data in the virtual column.

It should be additionally noted that, according to the data query apparatus provided in this embodiment of the present invention, a write request sent by a client is obtained, and a secondary index is updated according to the write request, thereby achieving an effect of updating a secondary index in which index data in multiple second index columns is recorded.

In conclusion, according to the data query apparatus provided in this embodiment of the present invention, a target secondary index is queried by using query data. Index data in at least two second index columns is recorded in a first index column in the target secondary index. A row primary key corresponding to the query data is obtained, and then index data corresponding to the row primary key is obtained, thereby resolving a problem that in a related technology, when query is performed, multiple secondary indexes need to be queried separately, operations during the query process increase exponentially, and query efficiency is relatively low. An effect that index data in multiple second index columns can be queried by performing query once is achieved. The operations during the query process are simple, and query efficiency is relatively high.

FIG. 6 is a structural diagram of a data query apparatus according to an embodiment of the present invention. The data query apparatus includes at least one processor 610 (for example, a CPU), at least one network interface 620 or another communications interface, a memory 630, and at least one communications bus 640 that is configured to implement connection and communication between these apparatuses. The processor 610 is configured to execute a program 631 stored in the memory 630. The memory 630 may include a high-speed random access memory (RAM: Random Access Memory), and may further include a non-volatile memory (non-volatile memory), such as at least one magnetic disk memory. Communication connection between the data query apparatus and at least another one network element are implemented by using the at least one network interface 620 (which may be wired or wireless), and the Internet, a wide area network, a local area network, a metropolitan area network, or the like may be used.

The network interface 620 is configured to receive a query request sent by a client, where the query request includes query data.

The processor 610 is configured to query a target secondary index of a primary index according to the query request, to obtain a target row primary key corresponding to the query data, where the target secondary index includes a first index column, index data in at least two second index columns in the primary index is recorded in the first index column, each index data in the at least two second index columns corresponds to a respective row primary key, and the row primary key corresponds to an index row in the primary index.

The processor 610 is configured to obtain, from the primary index, index data in a target index row corresponding to the target row primary key.

The network interface 620 is configured to provide the index data in the target index row for the client.

Optionally, the processor 610 is configured to obtain the index data in the at least two second index columns from the primary index.

The processor 610 is configured to map the index data in the at least two second index columns into a virtual column, where the index data in the at least two second index columns is recorded in the virtual column.

The processor 610 is configured to establish the target secondary index according to the virtual column and the row primary key that corresponds to each index data in the virtual column, where the virtual column is the first index column in the target secondary index.

Optionally, each second index column in the primary index corresponds to a respective data type.

The processor 610 is configured to determine a data type of each index data in the virtual column according to the data type corresponding to each second index column of the at least two second index columns in the primary index.

The processor 610 is configured to establish the target secondary index according to the virtual column, a row key value corresponding to each index data in the virtual column, and the data type of each index data in the virtual column, where the data type of each index data in the virtual column forms an additional column of the target secondary index.

Optionally, the network interface 620 is configured to receive a write request sent by the client, where the write request includes a newly added index row.

The processor 610 is configured to write the newly added index row into the primary index, and allocate a corresponding row primary key to the newly added index row.

The processor 610 is configured to determine the at least two second index columns corresponding to the virtual column in the target secondary index.

The processor 610 is configured to obtain, from the newly added index row, the index data that belongs to the at least two second index columns.

The processor 610 is configured to write, into the target secondary index, the index data that belongs to the at least two second index columns and that is in the newly added index row.

Optionally, the query request further includes a target data type and an identifier of the target secondary index.

The processor 610 is configured to determine the target secondary index according to the identifier of the target secondary index.

The processor 610 is configured to determine a target secondary index row in the target secondary index according to the target data type and the query data, where index data in the target secondary index row is the same as the query data, and a data type in the target secondary index row is the same as the target data type.

The processor 610 is configured to determine a row primary key of the target secondary index row as the target row primary key.

It should be additionally noted that, according to the data query apparatus provided in this embodiment of the present invention, index data in at least two index columns is mapped into a virtual column, thereby achieving an effect that a secondary index can be established according to the virtual column and a row primary key that corresponds to the index data in the virtual column.

It should be additionally noted that, according to the data query apparatus provided in this embodiment of the present invention, a write request sent by a client is obtained, and a secondary index is updated according to the write request, thereby achieving an effect of updating a secondary index in which index data in multiple second index columns is recorded.

In conclusion, according to the data query apparatus provided in this embodiment of the present invention, a target secondary index is queried by using query data. Index data in at least two second index columns is recorded in a first index column in the target secondary index. A row primary key corresponding to the query data is obtained, and then index data corresponding to the row primary key is obtained, thereby resolving a problem that in a related technology, when query is performed, multiple secondary indexes need to be queried separately, operations during the query process increase exponentially, and query efficiency is relatively low. An effect that index data in multiple second index columns can be queried by performing query once is achieved. The operations during the query process are simple, and query efficiency is relatively high.

For the apparatus in the foregoing embodiments, a specific manner for executing an operation by each unit of the apparatus has been described in detail in the embodiments of the related method, and details are not described herein.

The foregoing descriptions are merely exemplary embodiments of the present invention, but are not intended to limit the present invention. Any modification, equivalent replacement, and improvement made without departing from the spirit and principle of the present invention shall fall within the protection scope of the present invention.

## Claims

1. A data query method, wherein the method comprises:
receiving a query request sent by a client, wherein the query request comprises query data;
querying a target secondary index of a primary index according to the query request, to obtain a target row primary key corresponding to the query data, wherein the target secondary index comprises a first index column, index data in at least two second index columns in the primary index is recorded in the first index column, each index data in the at least two second index columns corresponds to a respective row primary key, and the row primary key corresponds to an index row in the primary index;
obtaining, from the primary index, index data in a target index row corresponding to the target row primary key; and
providing the index data in the target index row for the client.

2. The method according to claim 1, wherein before the querying a target secondary index of a primary index according to the query request, the method further comprises:
obtaining the index data in the at least two second index columns from the primary index;
mapping the index data in the at least two second index columns into a virtual column, wherein the index data in the at least two second index columns is recorded in the virtual column; and
establishing the target secondary index according to the virtual column and the row primary key that corresponds to each index data in the virtual column, wherein the virtual column is the first index column in the target secondary index.

3. The method according to claim 2, wherein each second index column in the primary index corresponds to a respective data type, and the establishing the target secondary index according to the virtual column and the row primary key that corresponds to each index data in the virtual column comprises:
determining a data type of each index data in the virtual column according to the respective data type corresponding to each second index column of the at least two second index columns in the primary index; and
establishing the target secondary index according to the virtual column, a row key value corresponding to each index data in the virtual column, and the data type of each index data in the virtual column, wherein the data type of each index data in the virtual column forms an additional column of the target secondary index.

4. The method according to claim 2, wherein after the establishing the target secondary index according to the virtual column and the row primary key that corresponds to each index data in the virtual column, the method further comprises:
receiving a write request sent by the client, wherein the write request comprises a newly added index row;
writing the newly added index row into the primary index, and allocating a corresponding row primary key to the newly added index row;
determining the at least two second index columns corresponding to the virtual column in the target secondary index;
obtaining, from the newly added index row, the index data that belongs to the at least two second index columns; and
writing, into the target secondary index, the index data that belongs to the at least two second index columns and that is in the newly added index row.

5. The method according to claim 3, wherein the query request further comprises a target data type and an identifier of the target secondary index, and
the querying a target secondary index of a primary index according to the query request, to obtain a target row primary key corresponding to the query data comprises:
determining the target secondary index according to the identifier of the target secondary index;
determining a target secondary index row in the target secondary index according to the target data type and the query data, wherein index data in the target secondary index row is the same as the query data, and a data type in the target secondary index row is the same as the target data type; and
determining a row primary key of the target secondary index row as the target row primary key.

6. A data query apparatus, wherein the apparatus comprises:
a request receiving unit, configured to receive a query request sent by a client, wherein the query request comprises query data;
an index query unit, configured to query a target secondary index of a primary index according to the query request, to obtain a target row primary key corresponding to the query data, wherein the target secondary index comprises a first index column, index data in at least two second index columns in the primary index is recorded in the first index column, each index data in the at least two second index columns corresponds to a respective row primary key, and the row primary key corresponds to an index row in the primary index;
a data obtaining unit, configured to obtain, from the primary index, index data in a target index row corresponding to the target row primary key; and
a data providing unit, configured to provide the index data in the target index row for the client.

7. The apparatus according to claim 6, wherein the apparatus further comprises:
an index data obtaining unit, configured to obtain the index data in the at least two second index columns from the primary index;
a virtual mapping unit, configured to map the index data in the at least two second index columns into a virtual column, wherein the index data in the at least two second index columns is recorded in the virtual column; and
an index establishment unit, configured to establish the target secondary index according to the virtual column and the row primary key that corresponds to each index data in the virtual column, wherein the virtual column is the first index column in the target secondary index.

8. The apparatus according to claim 7, wherein each second index column in the primary index corresponds to a respective data type, and the index establishment unit is configured to:
determine a data type of each index data in the virtual column according to the respective data type corresponding to each second index column of the at least two second index columns in the primary index; and
establish the target secondary index according to the virtual column, a row key value corresponding to each index data in the virtual column, and the data type of each index data in the virtual column, wherein the data type of each index data in the virtual column forms an additional column of the target secondary index.

9. The apparatus according to claim 7, wherein the apparatus further comprises:
a write receiving unit, configured to receive a write request sent by the client, wherein the write request comprises a newly added index row;
an index write unit, configured to: write the newly added index row into the primary index, and allocate a corresponding row primary key to the newly added index row;
an index column determining unit, configured to determine the at least two second index columns corresponding to the virtual column in the target secondary index;
a newly added data obtaining unit, configured to obtain, from the newly added index row, the index data that belongs to the at least two second index columns; and
a data write unit, configured to write, into the target secondary index, the index data that belongs to the at least two second index columns and that is in the newly added index row.

10. The apparatus according to claim 8, wherein the query request further comprises a target data type and an identifier of the target secondary index, and the index query unit is configured to:
determine the target secondary index according to the identifier of the target secondary index;
determine a target secondary index row in the target secondary index according to the target data type and the query data, wherein index data in the target secondary index row is the same as the query data, and a data type in the target secondary index row is the same as the target data type; and
determine a row primary key of the target secondary index row as the target row primary key.
